# EUROPÄISCHE PATENTSCHRIFT

(11) **EP 0 363 759 B1**
(45) Veröffentlichungstag und Bekanntmachung des Hinweises auf die Patenterteilung: **10.11.1993**
(21) Anmeldenummer: 89118112.5
(22) Anmeldetag: 29.09.1989
(51) Int. Cl.: C09B 48/00

(54) **Verfahren zur Herstellung eines gegebenenfalls substituierten Chinacridons**
Process for the manufacture of a possibly substituted quinacridone
Procédé de fabrication d'une quinacridone éventuellement substituée

(30) Priorität: 12.10.1988 DE 3834748
(43) Veröffentlichungstag der Anmeldung: 18.04.1990
(73) Patentinhaber: BAYER AG, 51368 Leverkusen (DE)
(72) Erfinder: Schütze, Detlef-Ingo, Dr., D-5000 Koeln 80 (DE); Schmitz, Reinold, Dr., D-5068 Odenthal (DE)

(56) Entgegenhaltungen:
- DE-A- 2 149 684
- GB-A- 828 052
- PATENT ABSTRACTS OF JAPAN, Band 2, Nr. 126 (C-78)[2651], Sektion C, 21. Oktober 1978; & JP-A-53 94 334 (ASAHI KASAI KOGYO K.K.) 18-08-1978
- CHEMICAL REVIEWS, Band 67, Nr. 1, 25. Januar 1967, Seiten 1-18, New York, US; S.S. LABANA et al.: "Quinacridones"

## Beschreibung

Die Erfindung betrifft ein Verfahren zur Herstellung von Chinacridonen, den wertvollen violetten oder roten Pigmenten durch Oxidation von Dihydrochinacridonen.

In der Literatur ist eine große Anzahl von Verfahren zur Oxidation der 6,13-Dihydrochinacridone beschrieben.

Eine bevorzugtes Oxidationsmittel für diese Reaktion ist beispielsweise das Natriumsalz der Nitrobenzol-m-sulfonsäure. So wird nach der US-PS 2 821 529 das 6,13-Dihydrochinacridon in wäßrig-alkoholischen Laugen mit dem Natriumsalz der Nitrobenzol-m-sulfonsäure oxidiert. Als weitere Medien für diese Oxidation werden z.B. Wasser/N-Methylcaprolactam/Alkalihydroxid (JP 57 108 162) oder Wasser/Dimethylsulfoxid/Alkalihydroxid (JP 54 135 821) vorgeschlagen.

Auch die Oxidation der 6,13-Dihydrochinacridone mit anderen aromatischen Nitroverbindungen wie beispielsweise o-Nitrotoluol in alkoholischen oder wäßrigalkoholischen Lösungsmitteln wurde beschrieben (JP 52 150 439).

In allen diesen Patentschriften wird zwar auch Luft oder Sauerstoff als Oxidationsmittel erwähnt, jedoch lassen sich die 6,13-Dihydrochinacridone nach diesen Verfahren mit Luft in den meisten Fällen nicht quantitativ oxidieren. Dies gilt insbesondere für die substituierten Derivate.

Als Oxidationsmittel wurden ferner Anthrachinonsulfonsäuren verwendet, wovon - wie in der FR-PS 1 225 352 beschrieben - mindestens stöchiometrische Mengen, bezogen auf jedes Mol 6,13-Dihydrochinacridon, notwendig sind. Ferner wird darauf hingewiesen, daß sich die Oxidation mit Sauerstoff nur mit wenig befriedigenden Ausbeuten durchführen läßt.

Somit können die angeführten Verfahren aus verschiedenen Gründen nicht befriedigen. Einen weiteren Nachteil weist insbesondere die Oxidation mit aromatischen Nitroverbindungen auf, da die Gefahr der weiteren Oxidation zu Chinacridonchinonen besteht. Es hat daher nicht an Versuchen gefehlt, das Oxidationsverfahren mit Sauerstoff bzw. sauerstoffhaltigen Gasen zu verbessern.

In der DE-AS 1 210 110 wird ein Verfahren beschrieben, bei dem die Oxidation der 6,13-Dihydrochinacridone in Alkohol, insbesondere Ethylenglykol, Wasser und Natriumhydroxid unter Zusatz von geringen Mengen Chinonen, wie beispielsweise Anthrachinon, Phenanthrenchinon, Naphthochinonen oder deren Sulfon- oder Carbonsäuren durchgeführt wird. Auch andere Reaktionsmedien wie beispielsweise Wasser/Tetramethylensulfon/Alkalihydroxid (US-PS 3 475 436), Dimethylacetamid oder Alkandiole, u.a. unter Zusatz von Alkalihydroxid (JP 72 09 101), N-Alkylpyrrolidon-(2)/Alkalihydroxid (JP 72 07 703) oder C₁₋₃-Alkohole/Wasser/Alkalihydroxid unter Zusatz von Anthrachinonsulfonsäuren (JP 53 94 354) werden für die Oxidation mit Luft oder Sauerstoff vorgeschlagen.

Ferner wird in der US-PS 3 738 988 ein Luftoxidations-Verfahren beschrieben, bei dem in wäßrig-alkalischem Medium neben Anthrachinonsulfonsäuren größere Anteile an Eisen-, Nickel- oder Kobaltsalzen zum Einsatz kommen.

Alle oben angeführten Verfahren besitzen jedoch den Nachteil, daß sie entweder durch die eingesetzten Lösungsmittel oder den notwendigen Zusatz von Metallsalzen Probleme bei der Aufarbeitung bereiten, oder aber daß sie durch die notwendigen sehr hohen Verdünnungen und langen Reaktionszeiten, die insbesondere bei substituierten Chinacridonen erforderlich sind, nicht wirtschaftlich sind.

Überraschenderweise gelingt es durch das erfindungsgemäße Verfahren, die oben genannten Nachteile ganz oder teilweise zu vermeiden und Chinacridone mit hohen Ausbeuten, hoher Reinheit bei kürzeren Oxidationszeiten und konzentrierten Reaktionsbedingungen zu erhalten.

Das erfindungsgemäße Verfahren zur Herstellung eines gegebenenfalls substituierten Chinacridons durch Oxidation eines gegebenenfalls substituierten Dihydrochinacridons mit Sauerstoff oder einem Sauerstoff enthaltenden Gas in Gegenwart von Alkali, eines Lösungs- oder Verdünnungsmittels und eines sauerstoffübertragenden Mittels ist dadurch gekennzeichnet, daß man in Anwesenheit einer quartären Ammoniumverbindung oxidiert.

Vorzugsweise dient das Verfahren zur Herstellung eines Chinacridons der Formel 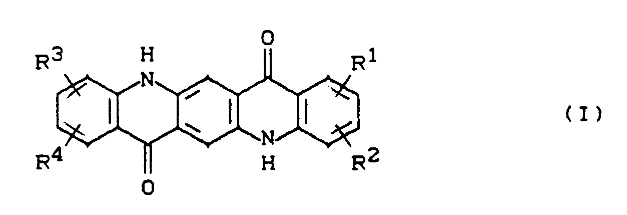
in der R¹, R², R³, R⁴ Wasserstoff oder für Chinacridone übliche Substituenten, z.B. C₁-C₄-Alkyl (Methyl, Ethyl), Halogen (Chlor, Fluor), C₁-C₄-Alkoxy (Methoxy, Ethoxy), Trifluormethyl, Carboxyl, ggf. durch C₁-C₄-Alkyl (Methyl, Ethyl) oder Phenyl, mono- oder disubstituiertes Carbamoyl, gegebenenfalls durch C₁-C₄-Alkyl (Methyl, Ethyl) oder Phenyl, mono- oder disubstituiertes Sulfamoyl bezeichnen.

Das Verfahren eignet sich auch zur Herstellung von Gemischen von Chinacridonen, insbesondere solchen der Formel (I).

In die Oxidation eingesetzt wird ein Dihydrochinacridon der Formel 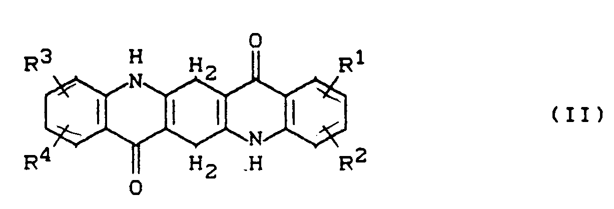
in der R¹, R², R³, R⁴ die oben angegebene Bedeutung haben.

Zur Herstellung von Chinacridongemischen setzt man Gemische von Dihydrochinacridonen ein.

Die erfindungsgemäß eingesetzten 6,13-Dihydrochinacridone sind literaturbekannt und können beispielsweise aus den 2,5-Diarylamino-3,6-dihydroterephthalsäureestern in hochsiedenden Lösungsmitteln im Temperaturbereich von 240 bis 300°C, wie beispielsweise Diphenyl/Diphenylether-Gemischen gemäß den US-Patentschriften 2 821 529 und 2 821 530, in Dimethyldiphenylether-Isomerengemischen gemäß der DE-OS 3 605 976, in Dibenzylether gemäß JP 5 757 749 oder beispielsweise in Polyphosphorsäure gemäß der DE-AS 1 208 840 hergestellt werden.

Als Lösungs- oder Verdünnungsmittel kommen vorzugsweise Wasser oder Alkohole, z.B. Methanol, Ethanol, Propanol, i-Propanol, n-Butanol, Glykole oder Glykolether, z.B. Ethylenglykol, Ethylenglykolmonomethylether, Polyglykole, Dimethylformamid, Dimethylsulfoxid, N-Methylpyrrolidon oder Gemische dieser Lösungsmittel in Betracht.

Besonders bevorzugt arbeitet man in Wasser, Alkohol (Methanol, Ethanol, i-Propanol) oder Wasser-Alkohol-Gemischen.

Als sauerstoffübertragende Mittel werden vorzugsweise eingesetzt: Chinone wie Anthrachinon, Phenanthrenchinon, Naphthochinon und Chloranil sowie deren Sulfon- und Carbonsäuren, die auch als Salze Verwendung finden können. Besonders bevorzugt ist die Verwendung von Anthrachinon-mono- und disulfonsäuren, bzw. deren Salzen; ganz besonders bevorzugt wird Anthrachinon-2-sulfonsäure(salz) eingesetzt.

Bezogen auf Dihydrochinacridon werden vorzugsweise 0,5 bis 5 Gew.-% sauerstoffübertragendes Mittel zugesetzt.

Als quartäre Ammoniumverbindungen werden vorzugsweise Verbindungen der Formeln 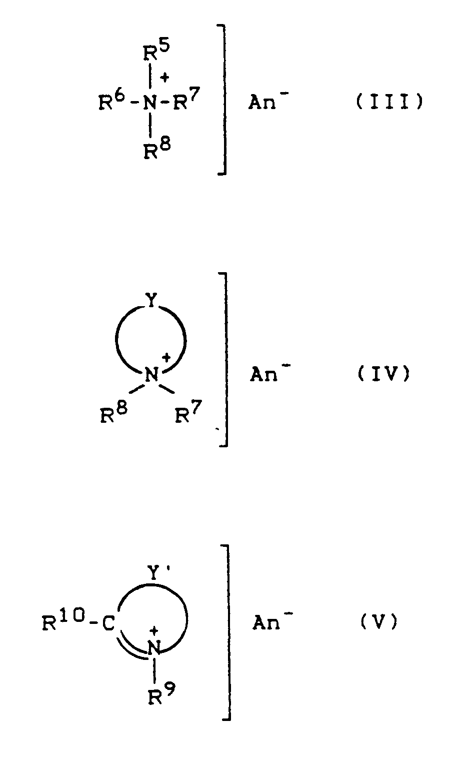
eingesetzt, wobei
- R⁵, R⁶, R⁷, R⁸, R⁹: C₁-C₅₄-Kohlenwasserstoffreste bezeichnen, deren C-Kette durch 1 bis 15 O-Atom(e) unterbrochen sein kann,
- R¹⁰: Wasserstoff oder einen Substituenten, z.B. C₁-C₄-Alkyl (Methyl, Ethyl) und
- Y, Y′: die restlichen Glieder eines vorzugsweise 5-oder 6-gliedrigen Ringes, z.B. eines Pyridin- oder Imidazol-Ringes, oder eines Ringsystems und
- An⁻: einen anionischen Rest bezeichnen.

Als Reste R⁵-R⁹ seien insbesondere genannt: C₁-C₁₈-Alkyl, z.B. Methyl, Ethyl, Dodecyl, Cetyl, Phenyl, Phenyl-C₁-C₁₈-alkyl, z.B. Benzyl, -CH₂CH₂O-(-CH₂-CH₂O-)ₙ-H mit n = 0 bis 20.

Als anionische Reste An⁻ seien beispielhaft genannt: Chlorid, Sulfat, Methylsulfat, Benzolsulfonat, Toluolsulfonat, Hydroxid.

Kationische Reste der Formeln (III) bis (V) sind z.B.: Tri-C₁-C₄-alkyl-phenylammonium, Di-C₁-C₄-alkyl-dibenzylammonium, C₁₀-C₁₆-Alkyl-tri-C₁-C₄-alkylammonium, Trialkylammoniumpolyglykolether, Dialkylbenzylammoniumpolyglykolether, N-C₁₀-C₁₅-Alkylpyridinium, N-Phenyl-C₇-C₁₀-alkylpyridinium sowie kationische Reste von Quaternierungsprodukten von C₁-C₄-Trialkylammonium, N-C₁-C₁₈-Alkylimidazolium. Die genannten kationischen Reste können z.B. in Form der Chloride, Sulfate, Methylsulfate, Toluolsulfonate, Benzolsulfonate oder Hydroxide vorliegen.

Im einzelnen sind zu nennen: Trimethylphenylammoniumchlorid, Triethylphenylammoniumchlorid, Trimethylbenzylammoniumchlorid, Triethylbenzylammoniumchlorid, Dimethyldibenzylammoniumchlorid, Diethyldibenzylammoniumchlorid, Dodecyltrimethylammoniumchlorid, Dodecyldimethylbenzylammoniumchlorid, mit Dimethyl- oder Diethylsulfat quarternierte Anlagerungsprodukte von 5 bis 10 Mol Ethylenoxid an C₁₆-C₂₀-Alkylamine, Dodecylbenylalkylamine und Dodecylbenzylamin, Benzylpyridiniumchlorid, Dodecylpyridiniumchlorid und Cetylpyridiniumchlorid.

Auch die Hydrogensulfate, Sulfate, Methylsulfate, Ethylsulfate, Benzol- oder Toluolsulfonate und Hydroxide können statt der genannten Chloride mit gleichem Erfolg eingesetzt werden.

Naturgemäß kann das erfindungsgemäße Verfahren auch in Gegenwart von Mischungen quartärer Ammoniumverbindungen und/oder Mischungen von sauerstoffübertragenden Mitteln durchgeführt werden.

Die Mengen an quartären Ammoniumsalzen liegen - bezogen auf das zu oxidierende 6,13-Dihydrochinacridon - im allgemeinen zwischen 0,1 und 15, vorzugsweise zwischen 0,5 und 8 Gew.-%.

Als Oxidationsmittel wird vorzugsweise Luft eingesetzt. Die Oxidation kann unter Druck durchgeführt werden.

Je nach Art des eingesetzten Lösungs- oder Verdünnungsmittels wird die Oxidation vorzugsweise bei Temperaturen von 70 bis 140°C, besonders bevorzugt beim Siedepunkt des Reaktionsgemisches, durchgeführt. Das Ende der Reaktion läßt sich durch Entnahme von Proben UV-spektroskopisch bestimmen.

Bezogen auf 1 Gew.-Teil des eingesetzten gegebenenfalls substituierten Dihydrochinacridons werden bevorzugt 1-20 Gew.-Teile, besonders bevorzugt 5-15 Gew.-Teile Lösungs-oder Verdünnungsmittel und bevorzugt 0,1-3 Gew.-Teile, besonders bevorzugt 0,3-1,5 Gew.-Teile Alkali, z. B. NaOH oder KOH, eingesetzt.

Die Isolierung der Chinacridone kann beispielsweise so erfolgen, daß man den Ansatz nach beendeter Oxidation heiß filtriert, mit Wasser bis zum farblosen Ablauf wäscht, gegebenenfalls zur Entfernung von Alkalispuren anschließend mit einer schwachen Säure, wie beispielsweise verdünnter Schwefelsäure, nachwäscht oder darin ausrührt und trocknet. Das erfindungsgemäße Verfahren liefert die Chinacridone, insbesondere auch die substituierten Derivate und ihre Gemische, in sehr guten Ausbeuten und in sehr hoher Reinheit nach vergleichsweise sehr kurzen Reaktionszeiten.

Die Chinacridon-Pigmente können entweder direkt oder nachdem sie nach einem für das jeweilige Anwendungsgebiet an sich bekannter Formulierungsverfahren in optimierte Pigmentformen überführt worden sind, eingesetzt werden.

Das erfindungsgemäße Verfahren wird durch die folgenden Ausführungsbeispiele weiter erläutert. Die darin angegebenen Teile und Prozentangaben beziehen sich auf das Gewicht.

### Beispiel 1

In 150 Teilen Methanol werden 12 Teile Natriumhydroxid unter gutem Rühren gelöst. Nachdem 30 Teile 6,13-Dihydrochinacridon der β-Modifikation (hergestellt durch Cyclisierung von 2,5-Dianilino-3,6-dihydroterephthalsäuredimethylester in Polyphosphorsäure) eingetragen worden sind, wird die Suspension 60 Minuten zum Sieden erhitzt. Anschließend werden 220 Teile 65°C warmes Wasser zugesetzt und erneut 30 Minuten zum Sieden erhitzt. Nach Zugabe von 0,75 Teilen Anthrachinon-2-sulfonsäure und 4 Teilen einer 50%igen wäßrigen Lösung von Dodecylbenzyldimethylammoniumchlorid wird unter Rückfluß durch Einleiten von 10 bis 15 l Luft/Stunde oxidiert. Nach 6 Stunden ist die Oxidation beendet.
Es wird heiß abgesaugt, mit heißem Wasser bis zum farblosen Anlauf neutral gewaschen und der Preßkuchen anschließend in 400 Teilen Wasser angeschlagen, mit 2 Teilen 50%iger Schwefelsäure kongosauer gestellt und 30 Minuten bei ca. 80°C gerührt. Danach wird abgesaugt, mit heißem Wasser neutral gewaschen und bei 60 bis 80°C getrocknet.

Man erhält 29,4 Teile (= 98,6 % der Theorie) reines γ-Chinacridon-Pigment, das in Einbrennlack ein brillantes Rot mit hohem Deckvermögen, großer Klarheit und sehr guten Fließverhalten darstellt.

Wird dieses Beispiel wiederholt, jedoch ohne Zusatz des quartären Ammoniumsalzes, so werden 11 Stunden für die Oxidation benötigt.

### Beispiel 2

Wird das Beispiel 1 wiederholt und statt 4 Teilen 50%iger wäßriger Dodecylbenzyldimethylammoniumchlorid-Lösung 2 Teile Benzyltrimethylammoniumhydroxid eingesetzt, so werden nach ebenfalls 6 Stunden 29,1 Teile (= 97,6 % der Theorie) an reinem γ-Chinacridon-Pigment mit vergleichbar guten Eingeschaften erhalten.

### Beispiel 3

Bei der Wiederholung des Beispiels 1, wobei statt 30 Teilen ß-Dihydrochinacridon 30 Teile α-Dihydrochinacridon (hergestellt durch Cyclisierung von 2,5-Dianilino-3,6-dihydroterephthalsäuredimethylester in einem Dimethyldiphenyl-Isomerengemisch bei 280 bis 290°C) eingesetzt werden, wurden nach einer Oxidationszeit von 5,5 Stunden 29,5 Teile (= 98,9 % der Theorie) reines γ-Chinacridon mit den gleichen sehr guten Eigenschaften erhalten.

### Beispiel 4

40 Teile Natriumhydroxid werden in 190 Teilen Methanol und 90 Teilen Wasser gelöst. In diese Lösung werden kann zunächst 30 Teile α-Dihydrochinacridon (hergestellt durch Cyclisierung von 2,5-Dianilino-3,6-dihydroterephthalsäuredimethylester in einem Dimethyl-Diphenyl-Isomerengemisch bei 280 bis 290°C) eingetragen und ca. 10 Minuten verrührt. Anschließend werden 1 Teil Anthrachinon-2-sulfonsäure und 4 Teile einer 50%igen wäßrigen Dodecylbenzyldimethylammoniumchlorid-Lösung zugesetzt.

Unter Einleiten von 10 bis 15 l Luft/Stunde wird nachfolgend 3 Stunden unter Rückfluß erhitzt. Danach wird heiß abgesaugt, mit heißem Wasser gewaschen, der Nutschkuchen in 600 Teilen Wasser/3 Teilen 50%iger Schwefelsäure 30 Minuten bei 80°C ausgerührt, erneut abgesaugt, mit Wasser gewaschen und bei 70 bis 80°C getrocknet.

Man erhält 29 Teile (= 97,3 % der Theorie) eines violetten Produktes, das nach Formierung, beispielsweise einer Salzmahlung, in lasierende oder deckende β-Chinacridon-Pigmente von hoher Reinheit überführt werden kann. Bei Durchführung dieses Beispiels ohne Zusatz des quartären Ammoniumsalzes werden zur Oxidation bei vergleichbarer Ausbeute 5,5 Stunden benötigt.

### Beispiel 5

Wird das Beispiel 4 mit 2 Teilen Benzyltriethylammoniumchlorid statt 4 Teilen 50%iger, wäßriger Dodecylbenzyldimethylammoniumchlorid-Lösung wiederholt, dann werden nach ebenfalls 3 Stunden 29,2 Teile (= 97,9% der Theorie) der violetten β-Chinacridon-Rohware erhalten.

### Beispiel 6

Nachdem in 235 Teilen Methanol und 45 Teilen Wasser 56 Teile Kaliumhydroxid gelöst worden sind, werden 38 Teile 2,9-Dichlordihydrochinacridon (hergestellt durch Cyclisierung von 2,5-Di-p-chloranilino-3,6-dihydroterephthalsäuredimethylester in Polyphosphorsäure) eingetragen und unter guter Rührung 60 Minuten zum Sieden erhitzt.

Anschließend werden 0,75 Teile Anthrachinon-2-sulfonsäure und 5 Teile einer 50%igen, wäßrigen Dodecylbenzyldimethylammoniumchlorid-Lösung zugesetzt. Durch Einleiten von 10 - 15 l Luft/Stunde wird 6 Stunden unter Rückfluß oxidiert. Es wird heiß abgesaugt, mit etwa 65°C warmen Wasser neutral gewaschen, der Nutschkuchen in 600 Teilen Wasser, das mit 2 Teilen 50%iger Schwefelsäure versetzt worden ist, 30 Minuten bei 80°C ausgerührt, erneut abgesaugt, mit Wasser neutral gewaschen und bei 70 bis 80°C getrocknet.

Es werden 36,2 Teile (=95,8 % der Theorie) an 2,9-Dichlorchinacridon erhalten, das nach Formierung, z.B. Salzmahlung, in lasierende oder deckende magentafarbene 2,9-Dichlorchinacridon-Pigmente von hoher Reinheit umgewandelt werden kann.

Unter gleichen Bedingungen, aber ohne Zusatz des quartären Ammoniumsalzes werden nach 14 Stunden Oxidationszeit 35,3 Teile (= 93,4 % der Theorie) erhalten.

### Beispiel 7

Wird das Beispiel 6 mit 38 Teilen 2,9-Dichlordihydrochinacridon, das in einem Dimethyldiphenyl-Isomerengemisch bei 280 - 290°C durch Cyclisierung von 2,5-Di-p-chloranilino-2,6-dihydroterephthalsäuredimethylester hergestellt worden ist, wiederholt, so werden 36,5 Teile (= 96,6 % der Theorie) 2,9-Dichlorochinacridon mit vergleichbarer Qualität nach 6-stündiger Oxidation erhalten.

### Beispiel 8

In 190 Teilen Methanol und 45 Teilen Wasser werden 50 Teile Natriumhydroxid gelöst. Dann werden 33 Teile 2,9-Dimethyldihydrochinacridon (hergestellt durch Cyclisierung von 2,5-Di-p-toluidino-2,6-dihydroterephthalsäuredimethylester in Polyphosphorsäure) eingetragen und unter gutem Rühren 30 Minuten auf 60 bis 65°C erhitzt. Anschließend werden 0,75 Teile Anthrachinon-2-sulfonsäure und 4 Teile einer 50%igen wäßrigen Dodecylbenzyldimethylammoniumchlorid-Lösung zugesetzt. Durch Einleiten von 10 bis 15 l Luft/Stunde wird unter Rückfluß 15 Stunden oxidiert.

Die Aufarbeitung gemäß Beispiel 6 führt bei einer Ausbeute von 31,7 Teilen (= 96,6 % der Theorie) zu einem Produkt, das durch Formierung, beispielsweise mittels Salzmahlung, in lasierende oder deckende blaustichig rote 2,9-Dimethylchinacridon-Pigmente von hoher Reinheit umgewandelt werden kann.

Bei der Durchführung dieses Beispiels ohne den Zusatz des quartären Ammoniumsalzes sind auch nach 60 Stunden nur etwa 50 % des 2,9-Dimethyldihydrochinacridons oxidiert.

### Beispiel 9

Wird das Beispiel 8 wiederholt und statt des Dodecylbenzyldimethylammoniumchlorids 2,5 Teile Dipolyglykoldodecylbenzylammoniumchlorid (Soluofen-VV-308 der GAF Corporation) eingesetzt, so werden nach 13 Stunden Oxidationszeit 31,3 Teile (= 95,4 % der Theorie) an 2,9-Dimethylchinacridon vergleichbarer Qualität erhalten.

### Beispiel 10

Bei der Wiederholung des Beispiels 8 unter Einsatz von 33 Teilen nach dem durch Cyclisierung von 2,5-Di-p-toluidino-2,6-dihydroterephthalsäuredimethylester in Dimethyldiphenyl-Isomerengemisch bei 280 bis 290°C hergestellten 2,9-Dimethyl-dihydrochinacridon werden 32,1 Teile (= 97,9 % der Theorie) an 2,9-Dimethylchinacridon vergleichbarer Qualität nach ebenfalls 13 Stunden Oxidationszeit erhalten.

### Beispiel 11

50 Teile Natriumhydroxid werden in 190 Teilen Methanol und 45 Teilen Wasser gelöst. Nachdem 36 Teile 2,9-Dimethoxydihydrochinacridon (hergestellt durch Cyclisierung von 2,5-Di-p-anisidinoterephthalsäuredimethylester in Polyphosphorsäure) eingetragen worden sind, wird die Suspension 30 Minuten bei 65°C gut gerührt. Anschließend werden 0,75 Teile Anthrachinon-2-sulfonsäure und 5 Teile einer 50%igen wäßrigen Lösung von Dodecylbenzyldimethylammoniumchlorid zugesetzt. Unter Rückfluß wird dann durch Einleiten von 10 bis 15 l Luft/Stunde in 12 Stunden oxidiert.

Die Aufarbeitung gemäß Beispiel 6 führt bei einer Ausbeute von 34,2 g (= 95,5 % der Theorie) zu einem Produkt, das durch Formierung, beispielsweise Salzmahlung, in lasierende oder deckende blauviolette 2,9-Dimethoxychinacridone von hoher Reinheit umgewandelt werden kann.

Die Oxidation ohne Zusatz des quartären Ammoniumsalzes führt bei sonst gleichen Versuchsbedingungen erst nach 24 Stunden zu einem Ergebnis.

### Beispiel 12

In 235 Teilen Methanol und 90 Teilen Wasser werden 49 Teile Kaliumhydroxid gelöst. Nachdem 26,9 Teile 2,9-Dichlordihydrochinacridon und 11,1 g β-Dihydrochinacridon (beide hergestellt nach dem Polyphosphorsäure-Verfahren) eingetragen worden sind, wird 1 Stunde unter Rückfluß gut gerührt. Dann werden 0,75 Teile Anthrachinon-2-sulfonsäure und 2,5 Teile Benzyltriethylammoniumchlorid zugesetzt und durch Einleiten von 10 bis 15 l Luft/Stunde in 5 Stunden unter Rückfluß oxidiert.

Nach der Aufarbeitung gemäß Beispiel 6 werden 35,4 Teile (= 96,3 % der Theorie) eines Produktes erhalten, das durch Formierung, beispielsweise Salzmahlung, in lasierende oder deckende magentafarbene Pigmente von hoher Reinheit umgewandelt werden kann.

Die Durchführung des Beispiels ohne Zusatz des quartären Ammoniumsalzes führt erst nach 10 Stunden zu einem Ergebnis.

### Beispiel 13

In 188 Teilen Isopropanol werden 34 Teile 2,9-Dimethyldihydrochinacridon (hergestellt nach dem Polyphosphorsäure-Verfahren) und 12 Teile Kaliumhydroxid 1 Stunde bei 75 bis 80°C verrührt. Anschließend werden weitere 38 Teile Kaliumhydroxid, 45 Teile Wasser und 1 Teil Anthrachinon-2-sulfonsäure und 4,5 Teile einer 50%igen, wäßrigen Dodecylbenzyldimethylammoniumchlorid-Lösung zugesetzt. Durch Einleiten von 10 bis 15 l Luft/Stunde wird 6 Stunden unter Rückfluß oxidiert.

Es wird heiß abgesaugt, mit Wasser gewaschen, der Nutschkuchen in 450 Teilen Wasser, das mit 2 Teilen 50%iger Schwefelsäure versetzt worden ist, 30 Minuten bei 80°C ausgerührt, erneut abgesaugt, mit Wasser neutral gewaschen und bei 70 bis 80°C getrocknet.

Man erhält 32,3 Teile (=95,6 % der Theorie) an 2,9-Dimethylchinacridon, das durch Formierung, beispielsweise mittels Salzmahlung, in lasierende oder deckende, blaustichig rote 2,9-Dimethylchinacridon-Pigmente von hoher Reinheit umgewandelt werden kann.

### Beispiel 14

In 200 Teilen Wasser werden 11 Teile Natriumhydroxid gelöst. Anschließend werden 28 Teile Dihydrochinacridon (hergestellt nach dem Polyphosphorsäure-Verfahren), 0,7 Teile Anthrachinon-2-sulfonsäure und 4 Teile einer 50%igen wäßrigen Dodecylbenzyldimethylammoniumchlorid-Lösung zugesetzt. Unter Durchleiten von 10 bis 15 l Luft/Stunde wird in 7 Stunden unter Rückfluß oxidiert.

Es wird abgesaugt, zunächst mit Wasser, dann mit 2%iger Schwefelsäure und anschließend erneut mit Wasser gewaschen. Bei 70 bis 80°C wird getrocknet. Man erhält 27,3 Teile (= 98 % der Theorie) an reinem γ-Chinacridon, das im Einbrennlack ein brillantes Rot mit hohem Deckvermögen, großer Klarheit und sehr gutem Fließverhalten darstellt.

## Patentansprüche

1. Verfahren zur Herstellung eines gegegebenenfalls substituierten Chinacridons durch Oxidation eines gegebenenfalls substituierten Dihydrochinacridons mit Sauerstoff oder einem Sauerstoff enthaltenden Gas in Gegenwart von Alkali, eines Lösungs- oder Verdünnungsmittels und eines sauerstoffübertragenden Mittels, dadurch gekennzeichnet, daß man in Anwesenheit einer quartären Ammoniumverbindung oxidiert.

2. Verfahren gemäß Anspruch 1 zur Herstellung eines Chinacridons der Formel 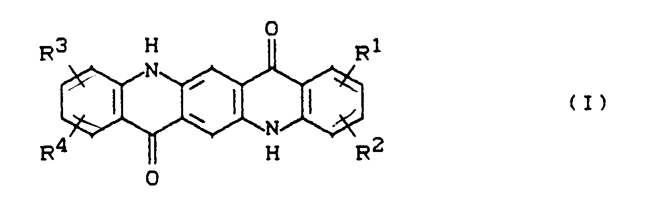 in der R¹, R², R³, R⁴ Wasserstoff oder für Chinacridone übliche Substituierten bezeichnen, durch Oxidation eines Dihydrochinacridons der Formel 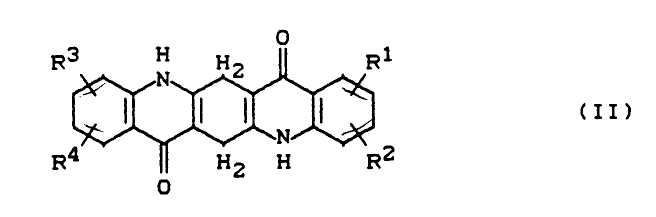 in der R¹, R², R³, R⁴ die oben angegebene Bedeutung haben.

3. Verfahren zur Herstellung von Gemischen gegebenen-falls substituierter Chinacridone gemäß den Anspruchen 1 und 2.

4. Verfahren gemäß einem oder mehreren der Ansprüche 1 bis 3, dadurch gekennzeichnet, daß man eine quartare Ammoniumverbindung der Formeln 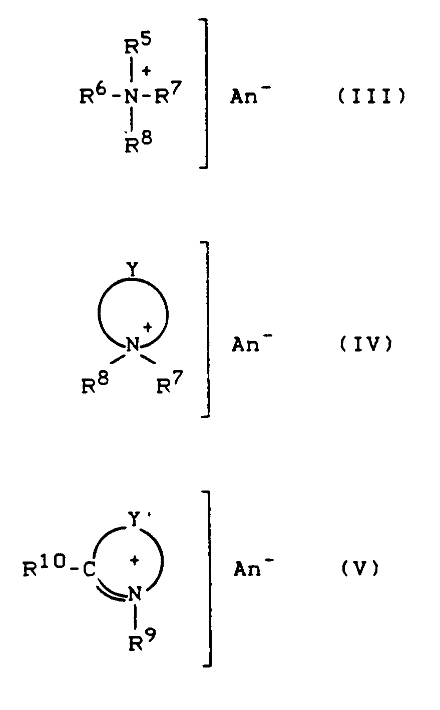 einsetzt, wobei
R⁵, R⁶, R⁷, R⁸, R⁹ C₁-C₅₄-Kohlenwasserstoffreste bezeichnen, deren C-Kette durch 1 bis 15 O-Atom(e) unterbrochen sein kann,
R¹⁰ Wasserstoff oder einen Substituenten, und
Y, Y′ die restlichen Glieder eines vorzugsweise 5-oder 6-gliedrigen Ringes oder eines Ringsystems und
An⁻ einen anionischen Rest bezeichnen.

5. Verfahren gemäß einem oder mehreren der Ansprüche 1 bis 4, dadurch gekennzeichnet, daß man, bezogen auf das Dihydrochinacridon, 0,1 bis 15 Gew.-%, vorzugsweise 0,5 bis 8 Gew.-% quartäre Ammoniumverbindung einsetzt.

6. Verfahren gemäß einem oder mehreren der Ansprüche 1 bis 5, dadurch gekennzeichnet, daß man als sauerstoffübertragendes Mittel Anthrachinon-2-sulfonsäure einsetzt.

7. Verfahren gemäß einem oder mehreren der Ansprüche 1 bis 6, dadurch gekennzeichnet, daß man in Wasser oder einem Alkohol, vorzugsweise Methanol, Ethanol oder i-Propanol oder in einem Wasser-Alkohol-Gemisch arbeitet.

8. Verfahren gemäß einem oder mehreren der Ansprüche 1 bis 7, dadurch gekennzeichnet, daß man bei 70 bis 140°C oxidiert.

9. Verfahren gemäß einem oder mehreren der Ansprüche 1 bis 8, dadurch gekennzeichnet, daß man mit Luft oxidiert.

## Claims

1. Process for the preparation of a substituted or unsubstituted quinacridone by oxidation of a substituted or unsubstituted dihydroquinacridone with oxygen or an oxygen-containing gas in the presence of alkali, a solvent or diluent and an oxygen transfer agent, which is characterized in that the oxidation is carried out in the presence of a quaternary ammonium compound.

2. Process according to Claim 1 for the preparation of a quinacridone of the formula 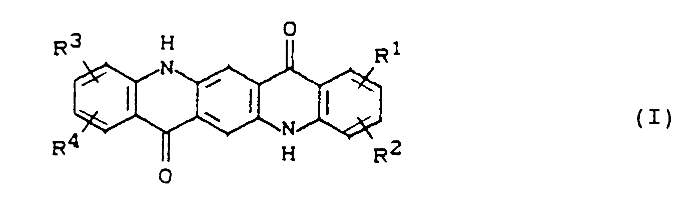 in which R¹, R², R³ R⁴ are hydrogen or substituents customary for quinacridones, by oxidation of a dihydroquinacridone of the formula 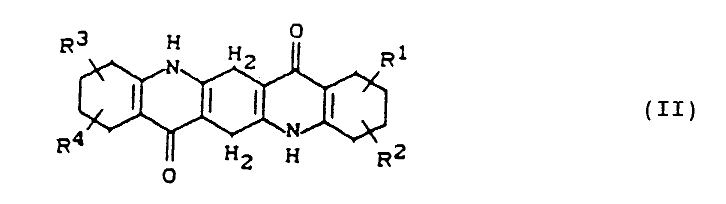 in which R¹, R², R³, R⁴ have the abovementioned meaning.

3. Process for the preparation of mixtures of substituted or unsubstituted quinacridones according to Claims 1 and 2.

4. Process according to one or more of Claims 1 to 3, characterized in that a quaternary ammonium compound of the formulae 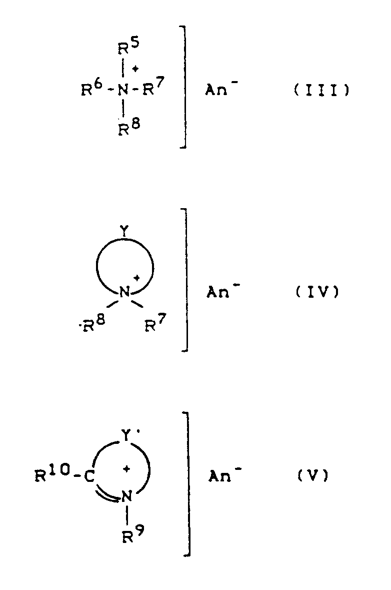 is used in which
R⁵, R⁶, R⁷, R⁸, R⁹ represent C₁-C₅₄-hydrocarbon radicals whose C chain can be interrupted by 1 to 15 O atom(s),
R¹⁰ represents hydrogen or a substituent, and
Y, Y' represent the remaining members of a preferably 5- or 6-membered ring, or of a ring system and
An⁻ represents an anionic radical.

5. Process according to one or more of Claims 1 to 4, characterized in that, relative to dihydroquinacridone, 0.1 to 15% by weight, preferably 0.5 to 8% by weight, of quaternary ammonium compound are used.

6. Process according to one of more of Claims 1 to 5, characterized in that anthraquinone-2-sulphonic acid is used as oxygen transfer agent.

7. Process according to one or more of Claims 1 to 6, characterized in that the reaction is carried out in water or in an alcohol, preferably methanol, ethanol or isopropanol or in a water-alcohol mixture.

8. Process according to one or more of Claims 1 to 7, characterized in that the oxidation is carried out at 70 to 140°C.

9. Process according to one or more of Claims 1 to 8, characterized in that the oxidation is carried out using air.

## Revendications

1. Procédé de préparation d'une quinacridone éventuellement substituée par oxydation d'une dihydroquinacridone éventuellement substituée à l'aide de l'oxygène ou d'un gaz contenant de l'oxygène en présence d'alcali, d'un solvant ou diluant et d'un agent de transfert de l'oxygène, caractérisé en ce que l'on oxyde en présence d'un dérivé d'ammonium quaternaire.

2. Procédé selon la revendication 1, pour la préparation d'une quinacridone de formule : 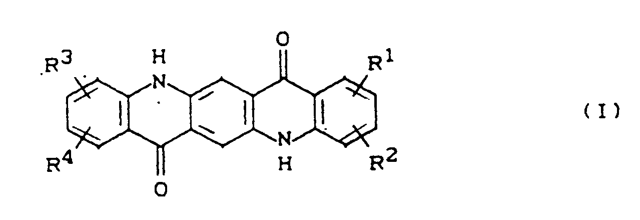 dans laquelle R¹, R², R³, R⁴ représentent l'hydrogène ou des substituants usuels pour les quinacridones, par oxydation d'une dihydroquinacridone de formule : 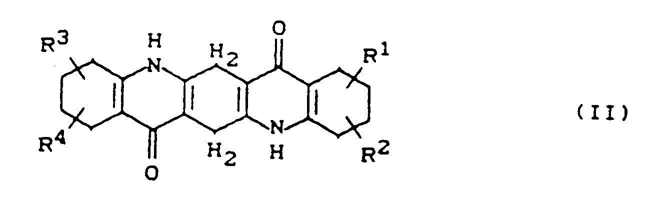 dans laquelle R¹, R², R³, R⁴ ont les significations indiquées ci-dessus.

3. Procédé de préparation de mélanges de quinacridones éventuellement substituées selon les revendications 1 et 2.

4. Procédé selon une ou plusieurs des revendications 1 à 3, caractérisé en ce que l'on utilise un dérivé d'ammonium quaternaire de formules : 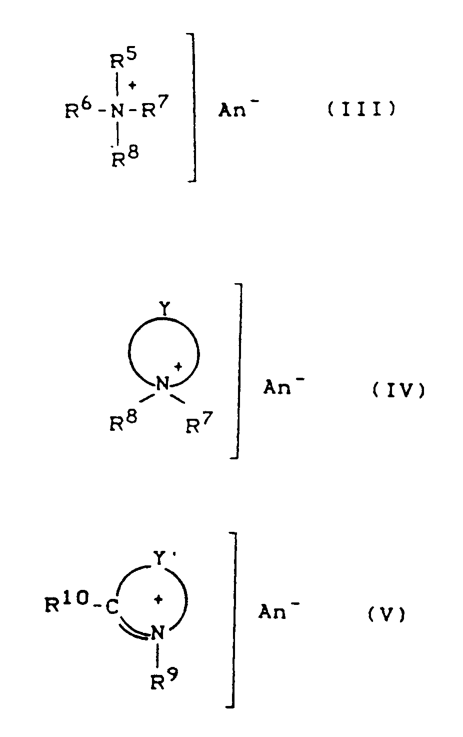 dans lesquelles
R⁵, R⁶, R⁷, R⁸, R⁹ représentent des radicaux hydrocarbonés en C₁-C₅₄ dont la chaîne carbonée peut être interrompue par 1 à 15 atomes d'oxygène,
R¹⁰ représente l'hydrogène ou un substituant,
Y, Y' représentent les chaînons manquants d'un cycle de préférence à 5 ou 6 chaînons ou d'un système cyclique et
An⁻ représente un groupe anionique.

5. Procédé selon une ou plusieurs des revendications 1 à 4, caractérisé en ce que l'on utilise le dérivé d'ammonium quaternaire en quantité de 0,1 à 15%, de préférence de 0,5 à 8% du poids de la dihydroquinacridone.

6. Procédé selon une ou plusieurs des revendications 1 à 5, caractérisé en ce que l'on utilise en tant qu'agent de transfert de l'oxygène l'acide anthraquinone-2-sulfonique.

7. Procédé selon une ou plusieurs des revendications 1 à 6, caractérisé en ce que l'on opère dans l'eau ou dans un alcool, de préférence le méthanol, l'éthanol ou l'isopropanol, ou dans un mélange eau-alcool.

8. Procédé selon une ou plusieurs des revendications 1 à 7, caractérisé en ce que l'on oxyde à des températures de 70 à 140°C.

9. Procédé selon une ou plusieurs des revendications 1 à 8, caractérisé en ce que l'on oxyde par l'air.
